**Europäisches Patentamt**

**European Patent Office**

**Office européen des brevets**

(19)

(11) Numéro de publication : **0 301 950 B1**

# FASCICULE DE BREVET EUROPEEN

(12)

(45) Date de publication du fascicule du brevet :
**02.01.92 Bulletin 92/01**

(51) Int. Cl.$^5$ : **F02B 37/12, F23R 3/26**

(21) Numéro de dépôt : **88401927.4**

(22) Date de dépôt : **25.07.88**

(54) **Moteur à combustion interne suralimenté équipé d'une chambrede combustion auxiliaire.**

(30) Priorité : **23.07.87 FR 8710446**

(43) Date de publication de la demande :
**01.02.89 Bulletin 89/05**

(45) Mention de la délivrance du brevet :
**02.01.92 Bulletin 92/01**

(84) Etats contractants désignés :
**AT BE CH DE ES GB GR IT LI LU NL SE**

(56) Documents cités :
**EP-A- 0 031 770**
**FR-A- 2 265 979**
**US-A- 2 655 787**

(73) Titulaire : **ETAT-FRANCAIS représenté par le DELEGUE GENERAL POUR L'ARMEMENT Bureau des Brevets et Inventions de la Délégation Générale pour l'Armement 14, rue Saint-Dominique**
**F-75997 Paris Armées (FR)**

(72) Inventeur : **Melchior, Jean**
**126 Bld du Montparnasse**
**F-75014 Paris (FR)**
Inventeur : **André, Thierry**
**7 Quai Voltaire**
**F-75007 Paris (FR)**

(74) Mandataire : **Lemoine, Michel et al**
**Cabinet Michel Lemoine et Bernasconi 13 Boulevard des Batignolles**
**F-75008 Paris (FR)**

EP 0 301 950 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention est relative à un moteur à combustion interne conforme au préambule de la revendication 1.

Un tel moteur est décrit par exemple dans le FR-A-2.265.979. Voir aussi le document EP-A-0.031.770.

L'invention a notamment pour but de faciliter la combustion du combustible dans la susdite zone primaire, quel que soit le régime de fonctionnement de la chambre de combustion auxiliaire, de protéger les éléments de celle-ci, et notamment ceux qui coopèrent au réglage du débit de l'air de combustion admis dans cette chambre de combustion, contre une élévation excessive de la température, et d'empêcher les dépôts de suie ou de coke.

Pour atteindre ce but, le moteur à combustion interne conforme à l'invention se distingue essentiellement par les caractéristiques définies par la partie caractérisante de la revendication 1. Dans le cas d'une pluralité de buses, celles-ci sont régulièrement réparties dans un plan perpendiculaire à l'axe de la zone primaire de combustion.

Le moteur en question présente, comme premier avantage, une économie d'air. En effet, tout l'air frais de combustion est introduit à travers le fond de cette chambre. L'air frais assure le refroidissement du tube à flamme. Il n'est donc plus indispensable de refroidir le tube à flamme par un débit d'air parasite à travers de petits orifices (technique du "film cooling" ou de la paroi poreuse ou micropercée), bien que l'éventualité de tels orifices ne soit pas totalement exclue.

Un deuxième avantage du moteur conforme à l'invention est la simplicité technologique du tube à flamme qui est un simple tube lisse non percé d'orifices pour l'air de combustion ou, en général, pour l'air de refroidissement. Cette simplicité technologique a un double aspect, celui de la grande simplicité de fabrication (coût réduit, possibilité de constituer ce tube par une pièce de fonderie simple, une pièce de céramique, etc...) et celui de l'homogénéité thermique du matériau (alors que, dans une chambre de type classique, les orifices provoquent des concentrations de contraintes thermiques, entraînant des risques de fissuration et/ou de déformation).

Un troisième avantage réside dans la facilité de dosage de l'air de combustion. Cet air étant introduit à travers le fond de chambre, c'est-à-dire à travers la partie froide de la chambre de combustion auxiliaire, le dosage mécanique de l'air est facilité.

Un quatrième avantage réside dans la ventilation des parois internes de la zone primaire. En effet, le fond de chambre, par construction, et la paroi cylindrique interne du tube à flamme sont parfaitement ventilés du fait qu'ils sont balayés par l'air de combustion: les pièces sont bien refroidies et les dépôts de suie ou de coke sont évités.

Selon un premier perfectionnement de l'invention, la chambre de combustion auxiliaire est agencée de façon à éviter au flux d'air franchissant les susdits moyens d'étranglement tout mouvement tournant autour du susdit axe, susceptible de projeter vers l'extérieur, par effet centrifuge, le combustible mélangé à ce flux d'air.

De cette façon, le combustible est amené à brûler en quasi-totalité dans la chambre de combustion auxiliaire, ce qui entraîne des économies de combustible et contribue à la propreté des gaz d'échappement.

Selon une construction avantageuse, les buses débouchent de préférence en aval de la portée de la virole sur le siège fixe. L'avantage de cette construction est de déterminer une distribution homogène du combustible sur la périphérie de la virole de façon à réaliser un bon mélange du combustible avec l'air. Les buses débouchent au voisinage du siège, donc là où la vitesse de l'air de combustion est maximale, ce qui améliore le mélange. Le débouché en aval du siège permet la purge automatique des buses lorsque l'arrivée du combustible est interrompue, à condition que des orifices fassent communiquer le canal amenant le combustible aux buses avec la première cavité.

Le piston d'équilibrage coopère de préférence avec un piston hydraulique coulissant dans une cavité cylindrique fixe qui communique avec des moyens générateurs de pression de combustible variable et avec les buses par l'intermédiaire d'un ajutage variable réalisé grâce à la coopération de deux éléments, à savoir une aiguille et un orifice, dont l'un est solidaire du piston hydraulique et l'autre de la cavité cylindrique fixe, de telle manière que la section de passage de l'ajutage variable varie dans le même sens que la section de passage des moyens d'étranglement à section de passage variable.

La construction qui vient d'être définie a les effets suivants :

— le réglage du débit d'air de combustion et celui du débit de combustible se font simultanément, c'est-à-dire sans déphasage qui serait dû à des retards de régulation, ce qui assure à tout moment un rapport air/combustible correct ;

— le fait d'équilibrer la virole (soumise à la pression d'air) par un piston hydraulique de plus petit diamètre permet d'utiliser une pression de combustible (PC2) toujours supérieure à la pression d'air (P) ; ainsi l'injection de combustible est-elle toujours possible grâce à la différence de pression s'exerçant à travers l'ajutage variable et les buses ;

— enfin la commande hydraulique permet le refroidissement et la lubrification des pièces en mouvement.

Selon un perfectionnement de la construction susvisée à piston hydraulique, celui-ci présente au moins un dégagement faisant communiquer la cavité cylindrique fixe sous pression de combustible variable avec une cavité de décharge maintenue à une pression inférieure à la valeur minimale de la susdite pression de combustible variable, la communication entre la cavité cylindrique fixe et la cavité de décharge étant établie lorsque le piston mobile dépasse une position fixée à l'avance, dans le sens de l'ouverture maximale de l'ajutage variable.

L'effet de ce dernier perfectionnement, qui est important, est de réaliser de façon simple une butée fluide. En effet, lorsque la chambre de combustion auxiliaire est soumise à une brusque montée en régime, le dispositif régulateur de pression est sollicité de façon à rendre maximale la pression de combustible variable (PC2). Ceci a pour effet de mettre la chambre en position d'ouverture maximale, grâce à l'action sur le piston hydraulique. Le débit de combustible injecté devient maximal du fait de l'ouverture maximale de l'ajutage variable et du maximum atteint par la pression différentielle exercée sur le combustible injecté. Toutefois, en raison de l'inertie du turbocompresseur, la pression d'air (P) tardera à s'établir à la valeur correcte, ce qui provoquerait un rapport air/combustible insuffisant et donc une surchauffe momentanée de la chambre de combustion auxiliaire et de la turbine. La turbine risquerait d'être détruite au moins partiellement par l'allongement de la flamme ou celle-ci risquerait de s'éteindre par insuffisance d'air. Le susdit dégagement évite ou plutôt limite ces phénomènes indésirables, ainsi qu'il sera expliqué en détail ci-après :

Selon une première solution, le piston d'équilibrage est relié rigidement au piston hydraulique et le conduit de dérivation est divisé en deux branches. La première de ces branches fait communiquer la sortie d'air du compresseur avec la première cavité d'alimentation de la zone primaire de la chambre de combustion. La seconde de ces branches fait communiquer la sortie du compresseur avec la seconde cavité d'alimentation de la zone secondaire de dilution de la chambre de combustion auxiliaire et elle est munie de seconds moyens d'étranglement à section de passage variable, situés en amont de la communication avec la seconde cavité et en amont de la communication avec la sortie de gaz des chambres de travail du moteur. Ces seconds moyens d'étranglement sont de préférence agencés de telle sorte que la différence de pression $\Delta P$ qu'ils engendrent varie dans le même sens que la pression d'air P et plus précisément, comme décrit dans les FR-A-2.179.310, 2.222.537 et 2.308.792, proportionnellement à la différence entre la pression P et une pression de référence P*.

L'effet de cette première solution est de réguler la différence de pression $\Delta P$ indépendamment de la vitesse de rotation du moteur et donc du débit d'air circulant dans le conduit de dérivation, quel que soit l'état de la chambre de combustion auxiliaire.

Selon une deuxième solution, le piston d'équilibrage est désolidarisé du piston hydraulique et coulisse dans la portée cylindrique fixe, librement dans le sens de l'ouverture des moyens d'étranglement, et coopère, par appui sur une butée solidaire du piston hydraulique, avec ce piston hydraulique lorsque les moyens d'étranglement se déplacent dans le sens de la fermeture. De plus, la face du piston d'équilibrage, opposée à la virole, délimite, avec la portée cylindrique fixe, une cavité où règne une pression de référence, séparée de la première cavité où règne la pression d'air, de telle manière que la différence de pression $\Delta P$ engendrée par les moyens d'étranglement à section de passage variable soit proportionnelle à la différence entre la susdite pression d'air et la pression de référence lorsque le piston d'équilibrage n'est pas en appui sur la butée solidaire du piston hydraulique.

L'effet de cette deuxième solution est de combiner en un seul ensemble les premiers et seconds moyens d'étranglement et d'en conjuguer les fonctions. On obtient ainsi un montage plus simple et plus économique.

D'autres caractéristiques et avantages de l'invention apparaîtront à la lecture du complément de description qui suit et qui se réfère aux dessins annexés.

La figure 1 représente schématiquement un moteur à combustion interne suralimenté, équipé d'une chambre de combustion auxiliaire pouvant être établie conformément à l'invention.

La figure 2 représente à plus grande échelle, en coupe axiale schématique partielle, une chambre de combustion auxiliaire conforme à l'invention.

La figure 3 représente à plus grande échelle encore, en coupe axiale schématique, le fond de la chambre de combustion auxiliaire de la figure 2 et les moyens d'alimentation en combustible de cette chambre.

La figure 4 représente de façon détaillée un moteur suralimenté équipé de la chambre de combustion auxiliaire de la figure 3.

La figure 5 représente une variante du moteur de la figure 4.

La figure 6 représente des moyens pour établir la pression de référence utilisée dans le mode de réalisation de la figure 4 ou dans la variante de la figure 5.

La figure 7 représente une chambre de combustion auxiliaire conforme à l'invention et englobant des perfectionnements complémentaires.

La figure 8 représente, en demi-coupe axiale schématique, une variante de la virole constituant le fond de la chambre de combustion auxiliaire.

La figure 9 représente, en coupe axiale plus grande échelle, une variante du débouché des orifices d'alimentation en combustible de la chambre de combustion auxiliaire.

La figure 10 montre un détail de la figure 9, vu dans un plan perpendiculaire à celui de cette dernière figure.

La figure 11 enfin représente à une autre variante.

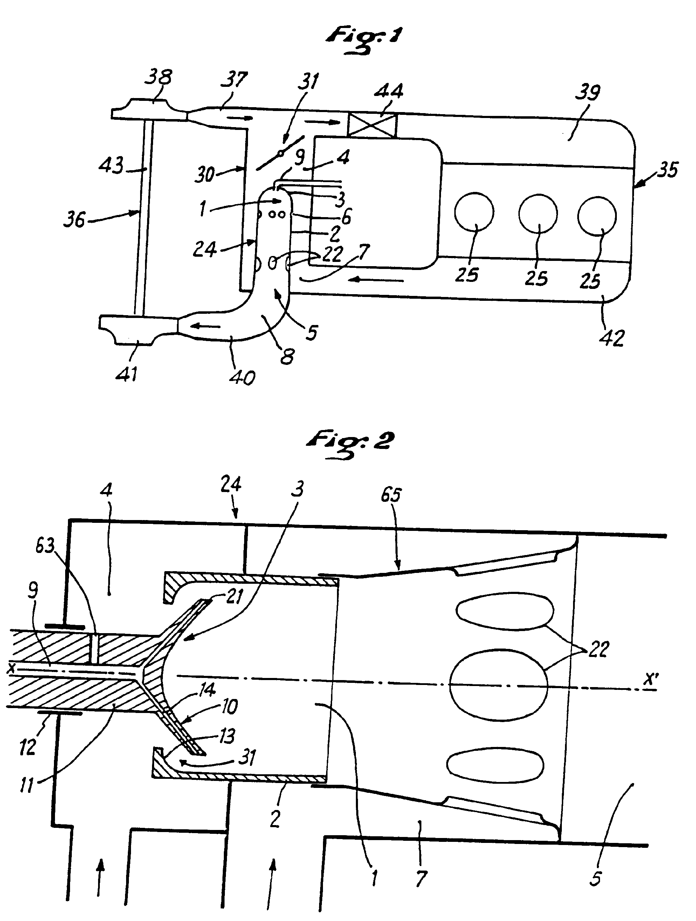

L'invention est relative à une chambre de combustion auxiliaire 24, dans un moteur à combustion interne 35 suralimenté par un turbocompresseur 36, du type général représenté à la figure 1. Le moteur 35 peut notamment être un moteur à allumage par compression ou à allumage commandé par étincelles. Comme le montre cette figure 1, la sortie d'air 37 d'un compresseur 38 communique avec l'entrée d'air 39 des chambres de travail 25 du moteur 35 et avec un conduit de dérivation 30. En général, chaque chambre de travail 25 est délimitée par un piston à l'intérieur d'un cylindre. L'entrée de gaz 40 d'une turbine 41 communique avec la sortie de gaz 42 des chambres de travail 25 et avec le conduit de dérivation 30. Avec le compresseur 38 qu'elle entraîne mécaniquement, en général par l'intermédiaire d'un arbre 43, la turbine 41 constitue le turbocompresseur 36, lequel peut comporter un seul étage (comme représenté schématiquement) ou au moins deux étages. Un refroidisseur d'air d'admission 44 est généralement placé en amont de l'entrée d'air 39 des chambres de travail 25. Le conduit de dérivation 30 est muni de moyens d'étranglement 31 à section de passage variable.

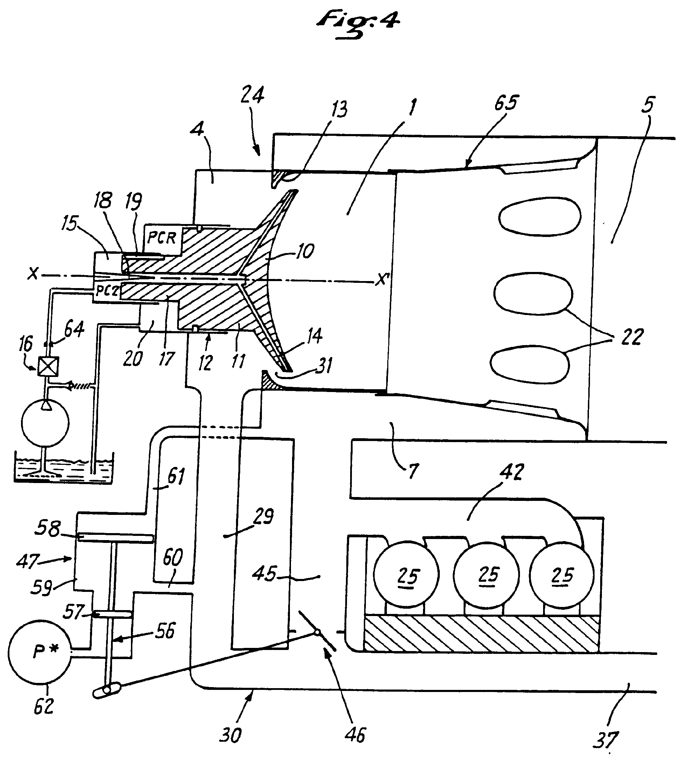

La chambre de combustion auxiliaire 24 comprend, d'amont en aval, une zone primaire de combustion 1 et une zone secondaire de dilution 5. La zone primaire 1, qui est délimitée par un tube à flamme 2 et par un fond de chambre 3, communique par l'intermédiaire d'au moins un passage 6 avec une première cavité 4 qui est reliée au conduit de dérivation 30. La zone secondaire de dilution 5, située en aval de la zone primaire 1, communique avec une seconde cavité 7 reliée à la sortie de gaz 42 des chambres de travail 25 et par l'intermédiaire d'orifices 22, selon les modes de réalisation des figures 1 et 4, avec le conduit de dérivation 30. Les orifices 22 sont ménagés dans un tube de dilution 65 qui fait suite au tube à flamme 2. La sortie de gaz 8 de la zone secondaire 5 communique avec l'entrée de gaz 40 de la turbine 41.

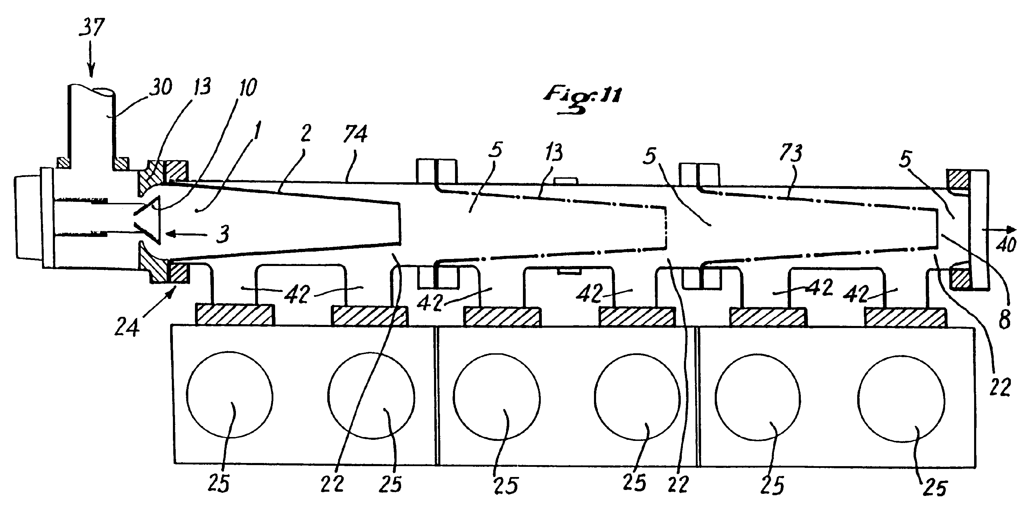

Selon la variante illustrée à la figure 11, la zone de dilution est constituée par le collecteur d'échappement 74 du moteur 35. Le tube de dilution 65 peut être remplacé par une pluralité de cônes 73. Les orifices 22 sont dans ce cas des passages concentriques. Quoique sans doute préférables, les cônes 73 ne sont pas indispensables et c'est la raison pour laquelle ils ont été représentés en trait mixte.

Une arrivée de combustible sous pression 9, aménagée dans le fond de chambre 3, débouche dans la zone primaire 1. Enfin, la chambre de combustion auxiliaire 24 comprend des moyens d'allumage pour le combustible provenant de l'arrivée 9. Ces moyens ne sont pas représentés à la figure 1 mais à la figure 7 où ils sont désignés par 52.

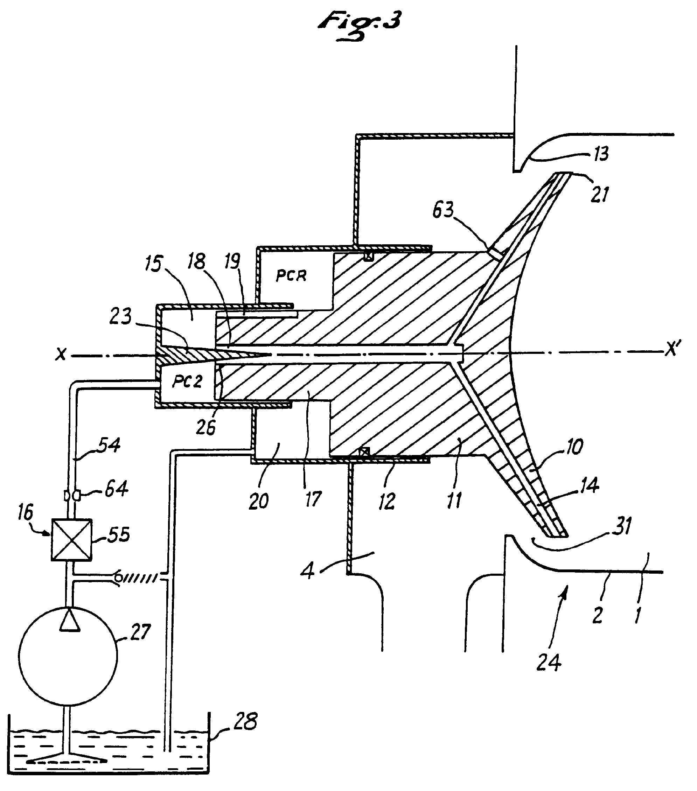

Conformément à l'invention et comme illustré schématiquement à la figure 2, la zone primaire 1 a une forme de révolution autour d'un axe X-X' et est délimitée par le tube à flamme 2 et par le fond de chambre 3.

Le tube à flamme 2, de forme cylindrique et/ou tronconique, est coaxial à l'axe X-X', lisse et démuni d'orifices d'alimentation d'air de section notable pouvant faire communiquer la zone primaire 1 avec la première cavité 4. L'expression "démuni d'orifices d'alimentation d'air de section notable" n'exclut pas la présence d'orifices ou de passages de faible section, assurant éventuellement un refroidissement supplémentaire du tube à flamme 2.

Le fond de chambre 3, qui est mobile parallèlement à l'axe X-X', coopère avec un siège fixe 13, solidaire du tube à flamme 2 et séparant la zone primaire 1 de la première cavité 4 de façon à constituer, avec le fond mobile 3, les moyens d'étranglement 31 à section de passage variable. Ainsi agencés, les passages 6 faisant communiquer la première cavité 4 avec la zone primaire de combustion 1 se confondent avec les moyens d'étranglement 31 à section de passage variable, comme cela est décrit dans le FR-A-2.265.979. Le fond de chambre 3 est constitué d'une virole 10 solidaire d'un piston d'équilibrage 11, la virole 10 et le piston 11 étant coaxiaux à l'axe X-X'. Le piston d'équilibrage 11 coulisse dans une portée cylindrique 12 solidaire des parois de la première cavité 4. L'arrivée de combustible sous pression 9 est constituée par une pluralité de buses 14 qui sont régulièrement réparties dans un plan perpendiculaire à l'axe X-X' et qui sont aménagées dans la virole 10 de façon à déboucher séparément dans le fond de chambre 3, vers la zone primaire de combustion 1.

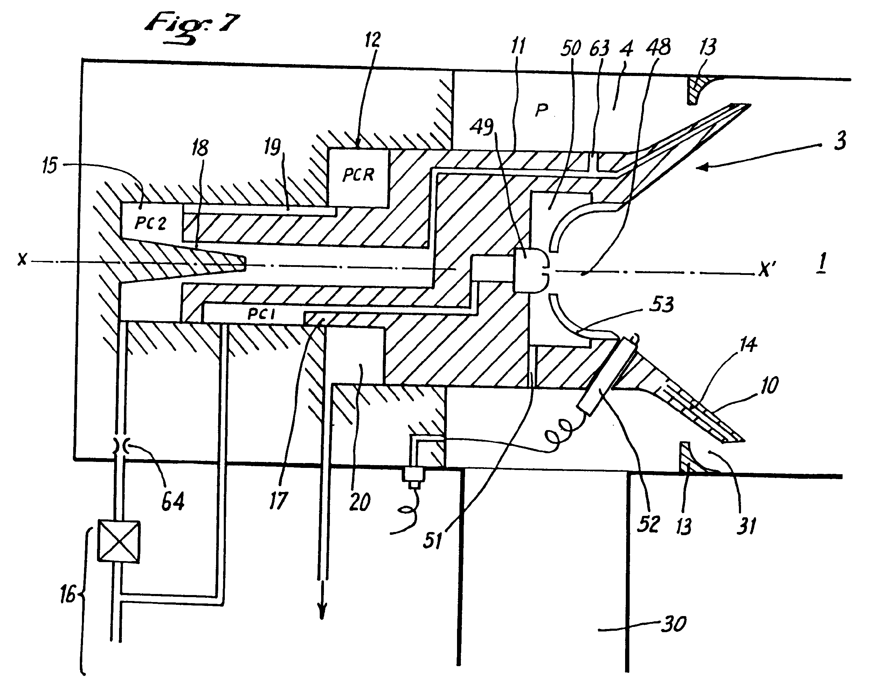

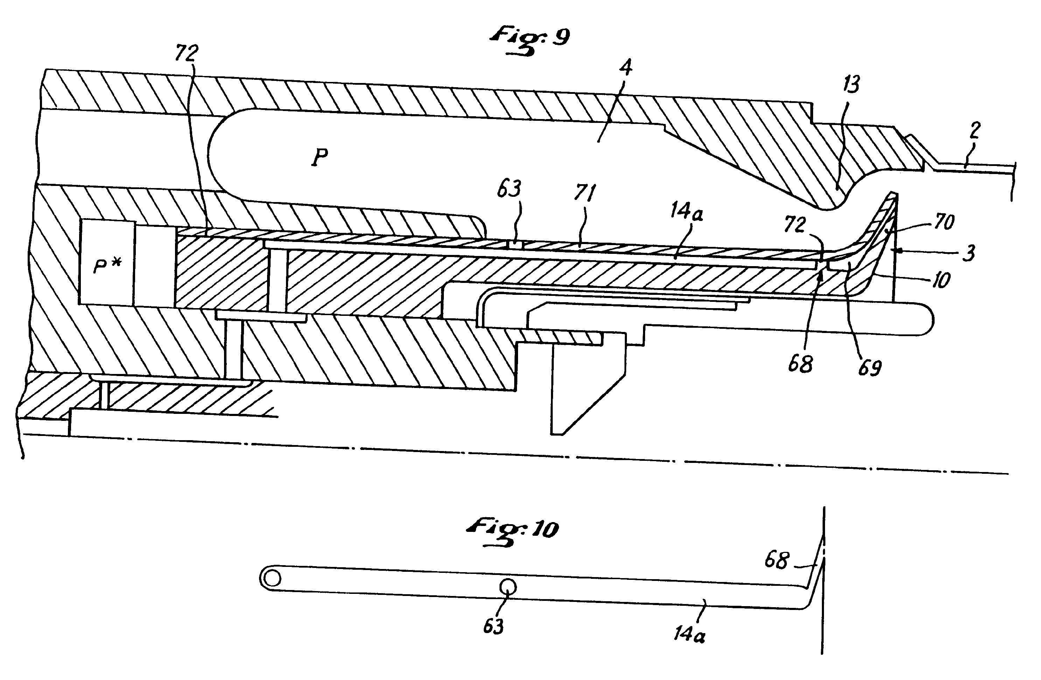

Selon la variante illustrée aux figures 9 et 10, le combustible est introduit dans la chambre par l'intermédiaire d'une pluralité de rainures 14a qui sont analogues aux buses 14 mais débouchent dans une cavité annulaire 69 par l'intermédiaire de fentes 68, de préférence tangentielles. Les rainures 14a communiquent avec la première cavité 4 par les orifices de purge 63. La cavité annulaire 69 débouche en aval du siège 13, sur la périphérie de la virole 10, grâce à une fente continue 70. La fente 70, la cavité 69 et les rainures 14 sont enfermées par une fourrure 71 emmanchée à force sur des portées 72. Ainsi le combustible dosé par l'ajutage 18, préalablement mélangé à l'air introduit par les orifices 63, forme un film homogène et continu dans la cavité 69 et s'échappe par la fente continue 70 pour brûler dans le sillage créé par le bord vif de la virole 10.

La chambre de combustion auxiliaire 24 est de préférence agencée de façon à éviter au mélange de l'air qui pénètre entre la périphérie de la virole 10 et le siège 13 et du combustible qui sort des buses 14 de tourner autour de l'axe X-X', à l'intérieur du tube à flamme 2, de façon à empêcher le combustible de ce mélange d'être projeté vers l'extérieur par effet centrifuge.

Selon une construction préférée, les buses 14 sont aménagées de façon approximativement radiale dans la virole 10 de façon à déboucher au voisinage du bord de fuite 21 de la virole 10. Comme montré à la figure 2, les buses 14 débouchent de préférence en aval de la portée de la virole 10 sous le siège fixe 13.

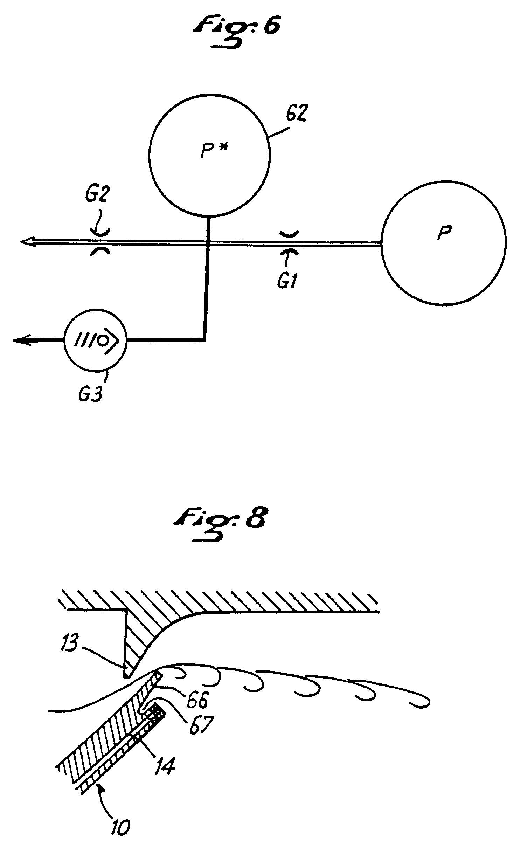

Le perfectionnement représenté schématiquement à la figure 8 a pour but d'améliorer le mélange d'air et de combustible introduit dans la zone primaire 1, en évitant les défauts d'homogénéité dans la distribution du combustible sur la périphérie de la virole 10, et de soustraire les gouttelettes de combustible à toute composante de vitesse centrifuge, c'est-à-dire dirigée vers la paroi interne du tube à flamme 2, car la combustion serait incomplète si le combustible atteignait cette paroi.

A cet effet, les buses 14 sont dirigées, selon une disposition aussi régulière que possible, vers la paroi interne d'une gorge 67 aménagée sur le bord extérieur de la virole 10, ce qui soustrait effectivement les gouttelettes issues des buses 14 à toute composante de vitesse centrifuge. On améliore encore l'homogénéité du mélange air/combustible en donnant au débouché des buses 14 une direction tangentielle par rapport à la périphérie de la virole 10. En prolongeant la gorge 67 par un bec annulaire 66, en amont des débouchés des buses 14, on favorise la formation d'un film de combustible qui sera aspiré et pulvérisé par le flux d'air de combustion. Le bord de fuite du bec 66 est de préférence à arête vive pour favoriser la formation de tourbillons turbulents.

Conformément à la construction avantageuse représentée schématiquement à la figure 3, le piston d'équilibrage 11 coopère avec un piston hydraulique 17 qui coulisse dans une cavité cylindrique fixe 15. Cette cavité 15 communique avec des moyens 16 générateurs de pression de combustible variable PC2 et avec les buses 14 par l'intermédiaire d'un ajutage variable 18. Cet ajutage 18 est réalisé grâce à la coopération d'une aiguille 23, de forme conique ou analogue, solidaire des parois de la cavité cylindrique fixe 15, et d'un orifice 26, porté par le piston hydraulique 17. En variante, l'aiguille 23 pourrait être solidaire du piston 17 et l'orifice 26 être porté par les parois de la cavité cylindrique fixe 15. L'ensemble est tel que la section de passage de l'ajutage variable 18 varie, en fonction de la position du piston 17 dans la cavité cylindrique 15, dans le même sens que la section de passage des moyens d'étranglement 31.

De préférence, le piston 17 présente au moins un dégagement 19 faisant communiquer la cavité 15, où le combustible est à la pression PC2, avec une cavité de décharge 20 maintenue à une pression PCR inférieure à la valeur minimale de la pression variable PC2. La communication entre les cavités 15 et 20 est établie par le dégagement 19 lorsque le piston hydraulique 17 dépasse une position établie à l'avance, dans le sens de l'ouverture maximale de l'ajutage 18 (sens allant de gauche à droite à la figure 3).

Comme représenté schématiquement à la figure 3, les moyens générateurs de pression de combustible variable 16 peuvent être constitués par une pompe 27, aspirant le combustible dans un réservoir 28 et le refoulant vers la cavité cylindrique 15 par l'intermédiaire d'un conduit de refoulement 54 sur lequel est monté un dispositif régulateur de pression 55 agencé de façon telle que la pression de combustible PC2 varie entre une valeur minimale $(PC2)_{mini}$, et une valeur maximale $(PC2)_{maxi}$, en fonction de la section de passage du dispositif régulateur de pression, disposé en série avec un gicleur fixe 64.

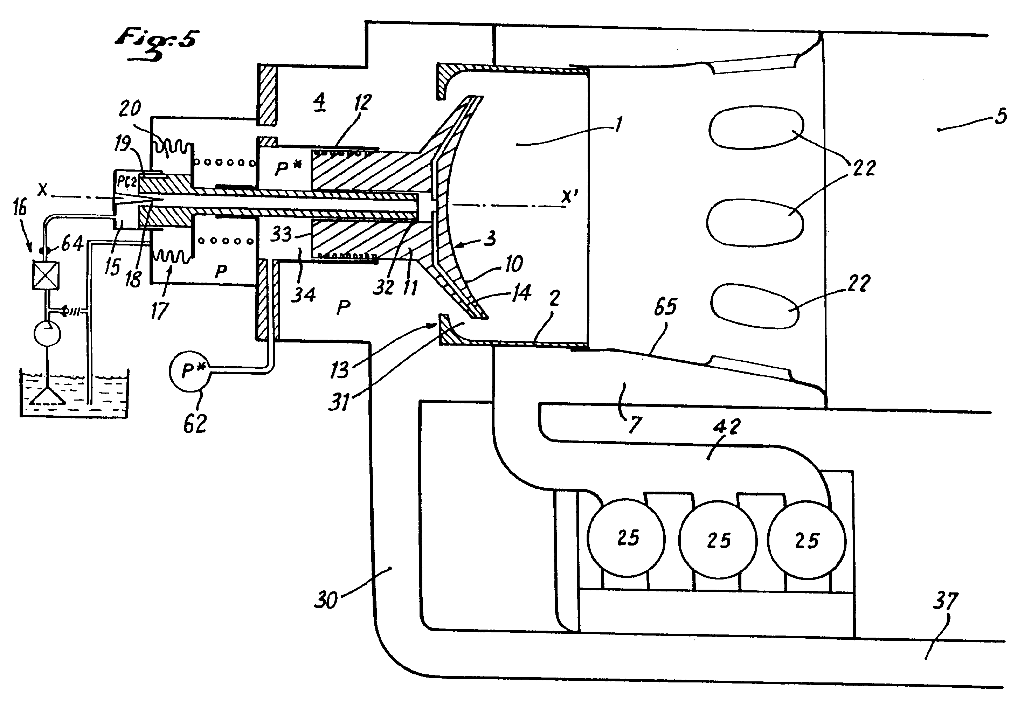

Le piston d'équilibrage 11 peut être relié rigidement au piston hydraulique 17, comme représenté schématiquement aux figures 3 et 4, ou être désolidarisé de celui-ci, comme représenté schématiquement à la figure 5, ces deux solutions étant décrites en détail ci-après.

Selon la première solution, illustrée à la figure 4, où le piston d'équilibrage 11 est relié rigidement au piston hydraulique 17, le conduit de dérivation 30 est subdivisé en deux branches 29 et 45. La première branche 29, qui est munie des premiers moyens d'étranglement 31, fait communiquer la sortie d'air 37 du compresseur 38 avec la première cavité 4 d'alimentation en air de la zone primaire 1 de la chambre de combustion auxiliaire 24. La deuxième branche 45 fait communiquer cette sortie d'air 37 avec la seconde cavité 7 d'alimentation en air de la zone secondaire de dilution 5 de la chambre de combustion 24 et elle est munie de seconds moyens d'étranglement 46, à section de passage variable, situés, sur cette branche 45, en amont de la communication avec la sortie de gaz 42 des chambres de travail 25 du moteur 35. Les seconds moyens d'étranglement 46 sont avantageusement actionnés de façon à créer une différence de pression ΔP qui varie dans le même sens que la pression P régnant en amont desdits seconds moyens d'étranglement 46 et, plus particulièrement, proportionnellement à la différence entre la pression P et une pression de référence P*. Les seconds moyens d'étranglement 46 pourront être actionnés par des moyens de commande 47 qui sont avantageusement agencés de la façon illustrée à la figure 4.

A cet effet, les moyens de commande 47 sont sensibles aux pressions régnant respectivement en amont et en aval des seconds moyens d'étranglement 46 et agencés de manière telle que la différence engendrée par ces seconds moyens d'étranglement 46 varie en fonction de la pression P, et de préférence dans le même sens que celle-ci, régnant en un point quelconque du circuit reliant la sortie d'air 37 du compresseur 38 à l'entrée de gaz 40 de la turbine 41.

De préférence, la différence de pression ΔP engendrée par ces seconds moyens d'étranglement 46 est proportionnelle à la différence entre la susdite pression P et une pression de référence P*. De tels moyens de commande 47 ont déjà été décrits dans les brevets français n° 2.179.310, 2.222.537 et 2.308.792 et peuvent comprendre deux pistons 57 et 58 solidaires d'une même tige 56 qui est attelée aux seconds moyens d'étranglement 46, la surface transversale du piston 57 étant plus petite que celle du piston 58. Les deux pistons 57, 58 sont mobiles dans un cylindre étagé 59. La partie centrale du cylindre 59 qui est comprise entre les deux pistons 57, 58 est reliée par un conduit 60 à la branche 29. La partie extrême du cylindre étagé 59 qui est limitée par le piston 58 de grand diamètre est reliée par un conduit 61 à la partie de la branche 45 qui est située en aval des seconds moyens d'étranglement 46 tandis que l'autre partie extrême du cylindre étagé, c'est-à-dire celle qui est limitée par le piston 57 de petit diamètre, est reliée à une enceinte 62 où règne la pression de référence P*. Selon cette solution, les moyens d'étranglement 46 trouvent leur équilibre lorsque la différence de pression ΔP sera égale à k fois la différence de pression (P – P*), où k est un coefficient égal au rapport de la section du piston de petit diamètre 57 à celle du piston de grand diamètre 58, si l'on néglige le diamètre de la tige 56 reliant ces deux pistons.

Ainsi, conformément à ce qui est décrit dans le FR-A-2.265.979, la zone primaire 1 de combustion de la chambre auxiliaire 24 est en permanence soumise à la différence de pression ΔP, ce qui assure, à tous les régimes de fonctionnement de cette chambre 24, une turbulence, une alimentation et un refroidissement corrects.

En outre, du fait que la cavité 7 communique avec la sortie de gaz 42 des chambres de travail 25 et avec la seconde branche 45 du conduit de dérivation 30, le tube de dilution 65 est en permanence refroidi, sur sa paroi extérieure, par la somme des débits d'air et de gaz empruntant les conduits 45 et 42, cette somme étant sensiblement indépendante de la vitesse du moteur 35.

Selon la deuxième solution qui est illustrée à la figure 5 et dans laquelle le piston d'équilibrage 11 est désolidarisé du piston hydraulique 17, le conduit de dérivation 30 ne comporte qu'une seule branche et les seconds moyens d'étranglement 46 sont confondus avec les premiers moyens d'étranglement 31. Dans ce cas, ces derniers sont agencés de manière à conjuguer les effets des premiers moyens d'étranglement 31 avec ceux des seconds moyens d'étranglement 46, comme cela est représenté schématiquement sur la figure 5 à titre d'exemple. Le piston d'équilibrage 11 coulisse dans la partie cylindrique 12, librement dans le sens de l'ouverture des premiers moyens d'étranglement 31, c'est-à-dire de gauche à droite sur la figure 5, et il coopère, par appui sur une butée 32 solidaire du piston hydraulique 17, avec ce piston 17, lorsque les moyens d'étranglement 31 se déplacent dans le sens de la fermeture. La face 33 du piston d'équilibrage 11, qui est opposée à la virole 10, délimite, avec la portée cylindrique fixe 12, une cavité 34 où règne la pression de référence P* et qui est séparée de la première cavité 4 où règne la pression d'air P définie ci-dessus. L'ensemble est tel que la différence de pression, engendrée par les premiers moyens d'étranglement 31, soit proportionnelle à la différence entre la pression d'air P et la pression de référence P* lorsque le piston d'équilibrage 11 n'est pas en appui sur la butée 32.

Dans le cas des figures 4 et 5, la pression de référence P* est de préférence variable en fonction de la pression d'air P, selon une loi prédéterminée à l'avance. Comme le montre la figure 6, cette loi est avantageusement réalisée en faisant communiquer l'enceinte 62 à la pression de référence P* avec la cavité 4 à la pression P par l'intermédiaire d'un premier orifice fixe G1 et avec l'atmosphère par l'intermédiaire, en parallèle, d'un second orifice fixe G2 et d'un troisième orifice G3, à clapet taré par un ressort, ne s'ouvrant que lorsque la pression de référence P* tend à dépasser un seuil déterminé à l'avance.

Selon un perfectionnement important qui est illustré à la figure 7, il est organisé, dans le fond de chambre 3, une zone de combustion pilote 48 qui débouche dans la zone primaire 1 et qui est essentiellement constituée par un pulvérisateur de combustible 49, aménagé dans l'axe X-X′ de la virole 10. Ce pulvérisateur de combustible 49 communique en permanence avec les moyens générateurs de pression de combustible 16 (à la pression fixe et maximale PC1) et débouche dans une troisième cavité 50, coaxiale à l'axe X-X′ et entourant le nez du pulvérisateur 49, comme montré à la figure 7. La troisième cavité 50 communique avec la première cavité 4, par des orifices fixes (c'est-à-dire dont la section de passage est fixe) 51, débouchant dans la troisième cavité 50 de préférence de façon tangentielle. Ces orifices 51 sont dimensionnés de façon à permettre le passage de l'air assurant la combustion complète du combustible introduit en permanence par le pulvérisateur 49, dans toutes les conditions de fonctionnement de la chambre de combustion auxiliaire 24. La zone de combustion pilote 48 comporte avantageusement les susdits moyens d'allumage 52 qui sont alors logés dans la virole 10 au voisinage de l'arrivée du combustible introduit par le pulvérisateur 49.

Enfin, le fond de chambre 3 délimitant la troisième cavité 50 est de préférence constitué par une double paroi 53, en matériau réfractaire. Cette double paroi 53, à l'intérieur de laquelle se développe la combustion du combustible introduit en permanence par le pulvérisateur 49, est agencée de manière à être portée en permanence à une température élevée supérieure à 600°C dès que la zone de combustion pilote

48 est en fonctionnement. Cette double paroi 53 constitue ainsi un point chaud susceptible de ré-initier automatiquement la combustion du combustible introduit par le pulvérisateur 49 en cas d'extinction accidentelle et momentanée de la flamme dans la zone de combustion pilote 48.

Ainsi qu'il a été exposé brièvement ci-dessus, le débouché des buses 14 en aval du siège 13 permet la purge automatique des buses 14, lorsque l'arrivée de combustible est interrompue (la virole 10 étant en appui sur le siège 13 et la combustion pilote centrale selon la figure 7 restant seule effective), à condition que des orifices 63 fassent communiquer avec la première cavité 4 le canal amenant le combustible aux buses 14. Cette purge peut être obtenue par le simple jeu de la différence de pression qui est créée par les seconds moyens d'étranglement 46 (figure 4) ou par les premiers moyens d'étranglement 31 (figure 5) et qui s'exerce de part et d'autre du fond de chambre 3 à travers les orifices 63. Ces derniers sont aménagés sur la virole 10 (figures 3 et 7) ou le piston 11 (figure 2), en amont du siège 13 et font communiquer les buses 14 avec la pression d'air P (cavité 4) en amont des premiers moyens d'étranglement 31. Les orifices 63 peuvent faciliter le mélange entre l'air et le combustible injecté. Si on veut réduire le débit de fuite de l'air à travers la chambre 24 en position fermée (veilleuse), il est possible de percer les orifices 63 de manière qu'ils soient masqués par la portée cylindrique 12 lorsque la virole 10 est en appui sur le siège 13.

On obtient ainsi un moteur suralimenté 35 et une chambre de combustion auxiliaire 24 dont le fonctionnement est le suivant.

1. Allumage et entretien de la flamme pilote (par exemple selon les figures 3 et 7).

Les moyens générateurs de pression de combustible 16, 27 sont mis en marche et alimentent directement le pulvérisateur central 49. Les moyens d'allumage (bougies) 52 sont mis en service. Compte tenu des bonnes conditions de pulvérisation du pulvérisateur 49, l'allumage de la flamme pilote est immédiat et, en cas d'extinction accidentelle en cours de fonctionnement du moteur, se rétablit très rapidement grâce à la double paroi 53 (figure 7).

2. Allumage de la partie principale de la chambre de combustion auxiliaire 24.

L'ouverture des moyens générateurs de pression de combustible 16 permet d'alimenter la cavité 15 à la pression d'injection PC2 maximale, ce qui ouvre le passage entre le siège 13 et la virole 10. Simultanément, le turbocompresseur 36 (figure 1) est mis en rotation par des moyens adéquats, de telle manière que la pression P de l'air délivré par le compresseur 38 s'accroisse et que la chambre 24 soit alimentée en air par l'intermédiaire du conduit de dérivation 30.

En s'ouvrant, la chambre 24 dégage l'ajutage variable 18. Le débit de combustible injecté par les buses 14 est maximal puisque la pression d'injection est maximale et que la section de passage de l'ajutage variable 18 est aussi maximale.

3. Limitation variable du débit principal de combustible (figure 3).

Du fait de l'inertie du turbocompresseur 36, il existe un risque de surchauffe. En effet, la pression d'air P n'a pas encore la valeur maximale correspondant à un débit d'air, dans la chambre 24 (dont l'ouverture est maximale), susceptible de brûler le débit maximal de combustible, sans surcharge ni extinction (extinction par excès de richesse du mélange).

Lors de l'ouverture de la chambre 24, le piston hydraulique 17 découvre le dégagement 19 en faisant communiquer la cavité 15, à la pression de combustible PC2, avec la cavité 20, à la pression de retour PCR (la pression PCR étant inférieure à la valeur minimale de la pression PC2). De ce fait, la pression PC2 s'effondre grâce à la présence de l'orifice calibré 64, ce qui fait reculer le piston hydraulique 17 en refermant l'ajutage 18 et chuter le débit du combustible injecté. Le recul du piston hydraulique 17 masque partiellement le dégagement 19 jusqu'à ce que la pression de combustible PC2 agissant sur ce piston 17 équilibre la pression d'air agissant sur le piston d'équilibrage 11. Ainsi, la pression de combustible PC2 augmente linéairement avec la pression d'air P, ce qui empêche la surchauffe pendant les périodes d'accélération du turbocompresseur 36. Ce dernier va s'accélérer jusqu'à ce que la pression d'air P atteigne la valeur qui équilibre la pression d'injection de combustible PC2, affichée par le dispositif régulateur de pression 55, lorsque le dégagement 19 est complètement fermé. En agissant sur le dispositif régulateur de pression 55, on peut régler à volonté la pression d'air P.

4. Fonctionnement avec le moteur en marche, dans le cas où le conduit de dérivation 30 est dédoublé (figure 4).

4.1 Montée en puissance du moteur.

Lorsqu'on charge le moteur 35, la température des gaz s'échappant des chambres de travail 25 par la sortie 42 s'élève. Ces gaz pénètrent dans la cavité 7 et se mélangent, grâce aux orifices 22, avec les gaz en provenance de la zone primaire 1 de la chambre de combustion auxiliaire 24. L'énergie des gaz pénétrant dans la turbine 41 augmente, ce qui fait monter la pression d'air P et rompt donc l'équilibre du piston d'équilibrage 11. Le fond 3 de la chambre 24 recule en fermant les moyens d'étranglement 31 et l'ajutage variable 18, jusqu'à ce qu'un nouvel équilibre soit atteint.

Il est à noter que le dispositif régulateur de pression 55 permet d'agir sur la valeur affichée de la pression de combustible PC2 et donc sur l'équilibre du piston 11. On peut ainsi agir facilement sur la valeur de la pression d'air P et donc sur le rapport air/combustible dans le moteur 35.

4.2 Accélération du moteur.

Si le moteur 35 accélère, il prélève une plus grande proportion du débit d'air refoulé par le compresseur 38 dans le conduit 37, ce qui diminue le débit d'air dans la branche 45 du conduit de dérivation 30. La chute de pression $\Delta P$ à travers les seconds moyens d'étranglement 46 diminue, ce qui rompt l'équilibre du piston différentiel 57, 58. Celui-ci se déplace jusqu'à retrouver son équilibre, ce qui ferme un peu plus les moyens d'étranglement 46 jusqu'à ce que la valeur de la chute de pression $\Delta P$ retrouve la valeur initiale correspondant à la pression P.

Ainsi, le fonctionnement de la chambre 24 n'est pas affecté par l'accélération. Une même pression d'air P donne une même position du fond 3 de la chambre 24, donc une même section de passage des premiers moyens d'étranglement 31 (cette valeur étant régulée par les seconds moyens d'étranglement 46), donc une même valeur de la chute de pression au franchissement des moyens d'étranglement 31, donc un même débit d'air, donc un même débit de combustible et finalement un même rapport d'air et de combustible.

5. Fonctionnement avec le moteur en marche, dans le cas où le conduit de dérivation 30 n'est pas dédoublé (figure 5).

5.1. Décélération et accélération du moteur.

Lors d'une décélération, le moteur 35 prélève une plus faible proportion de l'air refoulé par le compresseur 38. Le débit d'air augmente dans le conduit de dérivation 30, ce qui rompt l'équilibre de la virole 10 portée par le piston 11. En effet, l'équilibre de la virole 10 est le suivant, lorsqu'elle est libre de se déplacer, c'est-à-dire lorsqu'elle n'est pas en appui sur la butée 32 :

$$\Delta P = \frac{s - \sigma}{s - \sigma} \times (P - P^*), \text{ où}$$

S est le diamètre extérieur de la virole 10,
s est le diamètre du piston d'équilibrage 11 et

$\sigma$ le diamètre de la tige du piston 17, portant la butée 32.

Dans le cas d'une décélération, le piston 11 se déplace librement vers la droite de la figure 5, jusqu'à ce que soit rétabli l'équilibre

$$\Delta P = k (P - P^*).$$

Dans le cas d'une accélération, le piston 11 se déplace vers la gauche de la figure 5 (fermeture de la chambre 24) jusqu'à ce qu'il soit arrêté par la butée 32.

5.2. Montée en puissance.

La montée en puissance se fait de la manière exposée ci-dessus en 4.1.
La pression d'air P augmente, ce qui fait reculer le piston hydraulique 17 et donc la butée 32. Le débit d'air (moyens d'étranglement 31) et le débit de combustible (ajutage 18) diminuent progressivement et simultanément.

**Revendications**

1. Moteur à combustion interne (35) suralimenté par un turbocompresseur (36) dont la sortie d'air (37) du compresseur (38) communique avec l'entrée d'air (39) des chambres de travail (25) du moteur (35) et avec un conduit de dérivation (30) muni de moyens d'étranglement (31) à section de passage variable et dont l'entrée de gaz (40) de la turbine (41) communique avec la sortie de gaz (42) desdites chambres de travail (25) et avec le conduit de dérivation (30) en aval des susdits moyens d'étranglement (31), une chambre de combustion auxiliaire (24) étant montée sur ce conduit de dérivation (30), laquelle chambre de combustion auxiliaire (24) comporte :
— une zone primaire de combustion (1), ayant une forme de révolution autour d'un axe (X-X'), qui est délimitée par un tube à flamme (2), de forme cylindrique et/ou tronconique, et par un fond de chambre (3) et qui communique avec une première cavité (4) reliée au conduit de dérivation (30),
— une zone secondaire de dilution (5), située en aval de la susdite zone primaire (1), qui communique avec une seconde cavité (7) reliée à la sortie de gaz (42) des chambres de travail (25) et dont la sortie de gaz (8) communique avec l'entrée de gaz (40) de la turbine (41),
— une arrivée de combustible sous pression (9) constituée par au moins une buse (14) qui est aménagée dans le fond de chambre (3) et qui débouche vers la zone primaire de combustion (1), et
— des moyens d'allumage (52) pour le combustible provenant de cette arrivée de combustible (9),
— le fond de chambre (3) étant constitué d'une virole (10) solidaire d'un piston d'équilibrage (11), lesquels virole (10) et piston (11) sont coaxiaux au susdit axe (X-X'), le piston d'équilibrage (11) coulissant dans une portée cylindrique (12) solidaire des parois de la première cavité (4), caractérisé en ce que :
— le tube à flamme (2) est lisse et démuni d'orifices d'alimentation d'air de section notable pouvant faire communiquer la zone primaire (1) avec la susdite première cavité (4),
— le fond de chambre (3) est mobile par rapport au tube à flamme (2) parallèlement au susdit axe (X-X') et coopère avec un siège fixe (13) solidaire du tube à flamme (2) et séparant la zone primaire (1) de la première cavité (4) de façon à constituer, avec le fond de chambre (3), les moyens d'étranglement (31) à section de passage variable, et
— la susdite buse (14) est aménagée au moins approximativement radialement dans ladite virole (10) de façon à déboucher au voisinage du bord de fuite (21) de cette virole (10).

2. Moteur à combustion interne selon la revendication 1, caractérisé en ce que la chambre de combustion auxiliaire (24) est agencée de façon à éviter au flux d'air franchissant les moyens d'étranglement (31) tout mouvement tournant autour du susdit axe (X-X') susceptible de projeter vers l'extérieur, par effet centrifuge, le combustible mélangé à ce flux d'air.

3. Moteur à combustion interne selon l'une des revendications 1 et 2, caractérisé en ce que les buses (14) débouchent en aval de la portée de la virole (10) sur le siège fixe (13).

4. Moteur à combustion interne selon l'une des revendications 1 à 3, caractérisé en ce que le piston d'équilibrage (11) coopère avec un piston hydraulique (17), coulissant dans une cavité cylindrique fixe (15) qui communique avec des moyens (16) générateurs de pression de combustible variable (PC2) et avec les buses (14) par l'intermédiaire d'un ajutage variable (18) réalisé grâce à la coopération de deux éléments, à savoir une aiguille (23) et un orifice (26), dont l'un est solidaire du piston hydraulique (17) et l'autre de la cavité cylindrique fixe (15) de telle manière que la section de passage de l'ajutage variable (18) varie dans le même sens que la section de passage des moyens d'étranglement à section de passage variable (31).

5. Moteur à combustion interne selon la revendication 4, caractérisé en ce que le piston hydraulique mobile (17) présente au moins un dégagement (19) faisant communiquer la cavité cylindrique fixe (15) sous pression de combustible variable (PC2) avec une cavité de décharge (20) maintenue à une pression (PCR) inférieure à la valeur minimale de la pression variable (PC2), la communication entre les cavités (15) et (20) étant établie lorsque le piston mobile (17) dépasse une position fixée à l'avance, dans le sens de l'ouverture maximale de l'ajutage variable (18).

6. Moteur à combustion interne selon l'une quelconque des revendications 1 à 5, caractérisé en ce que :
— le piston d'équilibrage (11) est relié rigidement au piston hydraulique (17) et
— le conduit de dérivation (30) est divisé en deux branches (29) et (45)
* dont la première (29) fait communiquer la sortie d'air (37) du compresseur (38) avec la première cavité (4) d'alimentation de la zone primaire (1) de la chambre de combustion (24)
* et dont la seconde (45) fait communiquer ladite sortie d'air (37) avec la seconde cavité (7) d'alimentation de la zone secondaire (5) de dilution de la chambre de combustion (24) et est munie de seconds moyens d'étranglement (46) à section de passage variable situés en amont de la communication avec la seconde cavité (7) et en amont de la communication avec la sortie de gaz (42) des chambre de travail (25) du moteur (35).

7. Moteur à combustion interne selon la revendication 6, caractérisé en ce que les susdits seconds moyens d'étranglement (46) à section de passage variable sont actionnés par des moyens de commande (47) sensibles aux pressions régnant respectivement en amont et en aval desdits seconds moyen d'étranglement (46) et agencés de telle manière que la différence de pression engendrée par ces seconds moyens d'étranglement (46) varie en fonction seulement de la pression d'air (P), et de préférence dans le même sens que celle-ci, régnant en un point quelconque du circuit reliant la sortie d'air (37) du compresseur (38) à l'entrée de gaz (40) de la turbine (41).

8. Moteur à combustion interne selon la revendication 7, caractérisé en ce que la différence de pression ($\Delta P$) engendrée par les seconds moyens d'étranglement (46) est proportionnelle à la différence entre la susdite pression d'air (P) et une pression de référence (P*).

9. Moteur à combustion interne selon l'une quelconque des revendications 1 à 5, caractérisé
— en ce que le piston d'équilibrage (11) est désolidarisé du piston hydraulique (17) et coulisse dans la portée cylindrique (12) fixe, librement dans le sens de l'ouverture des moyens d'étranglement (31), et coopère, par appui sur une butée (32) solidaire du piston hydraulique (17), avec ledit piston hydraulique (17) lorsque les moyens d'étranglement (31) se déplacent dans le sens de la fermeture, et
— en ce que la face (33) du piston d'équilibrage (11), opposée à la virole (10), délimite, avec la portée cylindrique fixe (12), une cavité (34) où règne une pression de référence (P*), séparée de la susdite première cavité (4) où règne la pression d'air (P) régnant en un point quelconque du circuit reliant la sortie d'air (37) du compresseur (38) à l'entrée de gaz (40) de la turbine (41), de telle manière que la différence de pression (ΔP) engendrée par lesdits moyens d'étranglement à section de passage variable (31) soit proportionnelle à la différence entre la pression d'air (P) et la pression de référence (P*) lorsque le piston d'équilibrage (11) n'est pas en appui sur la butée (32) solidaire du piston hydraulique (17).

10. Moteur à combustion interne selon l'une des revendications 8 et 9, caractérisé en ce que la pression de référence (P*) est variable et est fonction de la susdite pression d'air (P) selon une loi prédéterminée à l'avance.

11. Moteur à combustion interne selon la revendication 10, caractérisé en ce que la susdite loi prédéterminée à l'avance est réalisée en faisant communiquer la cavité (62) à la pression de référence (P*) avec la cavité à la pression d'air (P) par l'intermédiaire d'un premier orifice fixe (G1) et la même cavité à la pression de référence (P*) avec l'atmosphère par l'intermédiaire d'un second orifice fixe (G2) et d'un troisième orifice variable (G3) ne s'ouvrant que lorsque la pression de référence (P*) atteint un seuil déterminé à l'avance.

12. Moteur à combustion interne selon l'une quelconque des revendications 1 à 11, caractérisé en ce qu'une zone de combustion pilote (48), organisée dans le fond de chambre (3), débouche dans la susdite zone primaire (1) et est constituée

— par un pulvérisateur de combustible (49), aménagé dans l'axe (X-X') de la virole (10), qui communique en permanence avec les moyens générateurs de pression de combustible (16) et qui débouche dans une troisième cavité (50) coaxiale à l'axe (X-X') et entourant le nez dudit pulvérisateur (49),

— laquelle troisième cavité (50) communique par des orifices fixes (51), aménagés de préférence de façon tangentielle ou partiellement tangentielle, avec la première cavité (4), lesdits orifices fixes (51) étant dimensionnés de manière à permettre le passage de l'air assurant la combustion complète du combustible introduit en permanence par le pulvérisateur (49) dans toutes les conditions de fonctionnement de la chambre de combustion (24).

13. Moteur à combustion interne selon la revendication 12, caractérisé en ce que la susdite zone de combustion pilote (48) comporte des moyens d'allumage (52) logés dans la virole (10) au voisinage de l'arrivée du combustible introduit par le pulvérisateur (49).

14. Moteur à combustion interne selon l'une des revendications 12 et 13, caractérisé en ce que le fond de chambre délimitant la troisième cavité (50) est constitué par une double paroi (53), en matériau réfractaire et agencée de manière à être portée en permanence à une température élevée supérieure à 600°C dès que la zone de combustion pilote (48) est en fonctionnement, de manière à constituer un point chaud susceptible de ré-initier automatiquement la combustion du combustible introduit par le pulvérisateur (49) en cas d'extinction accidentelle et momentanée de la flamme dans la zone de combustion pilote (48).

15. Moteur à combustion interne selon l'une quelconque des revendications 1 à 14, caractérisé en ce que les buses (14) sont reliées à des orifices de purge (63) communiquant avec la première cavité (4).

16. Moteur à combustion interne selon l'une quelconque des revendications 1 à 15, caractérisé en ce que les buses (14) débouchent dans une gorge (67), de préférence limitée par un bec annulaire (66).

## Patentansprüche

1. Brennkraftmaschine (35), die mit einem Turbolader (36) aufgeladen ist, bei dem der Luftauslaß (37) eines Verdichters (38) mit einem Lufteinlaß (39) der Brennräume (25) der Brennkraftmaschine (35) und mit einem Ableitrohr (30), das Drosselmittel (31) mit veränderbarem Durchlaßquerschnitt aufweist, verbunden ist, und bei dem der Gaseinlaß (41) der Turbine mit dem Gasauslaß (42) der Brennräume (25) und mit dem Ableitrohr (30) abstromseitig, bezogen auf die Drosselmittel (31) verbunden ist, und mit einem Hilfsverbrennungsraum (24), der auf dem Ableitrohr (30) angeordnet ist, wobei der Hilfsverbrennungsraum (24) folgendes aufweist :

— einen ersten Verbrennungsbereich (1), der um eine Achse (X-X') eine Rotationsform aufweist, die durch ein Flammrohr (2) mit zylindrischer und-/oder konischer Gestalt, sowie durch einen Boden des Raumes (3) begrenzt ist, und der mit einer ersten Ausnehmung (4) verbunden ist, die sich in dem Ableitrohr (30) befindet,

— einen zweiten Verdünnungsbereich (5), der abstromseitig, bezogen auf den ersten Verbrennungsbereich (1) angeordnet ist, und der mit einer zweiten Ausnehmung (7) verbunden ist, die am Gasauslaß (42) der Brennräume (25) angeordnet ist, und dessen Gasauslaß (8) mit dem Gaseinlaß (40) der Turbine (41) verbunden ist,

— eine Zuleitung von unter Druck stehendem Kraftstoff (9) durch wenigstens eine Düse (14), die im Boden des Raumes (3) angeordnet ist und die in Richtung auf den ersten Verbrennungsbereich (1) mündet, und

— Zündmittel (52) für den Kraftstoff, der aus der Zuleitung für den Kraftstoff (9) kommt,

— wobei der Boden des Raumes (3) durch einen Ring (10) gebildet ist, der mit einem Ausgleichskolben (11) verbunden ist, der Ring (10) und der Kolben (11) koaxial zu der Achse (X-X') angeordnet sind, der Ausgleichskolben (11) in einer zylindrischen Ausnehmung (12) bewegbar ist, die mit Wänden der ersten Ausnehmung (4) verbunden ist, dadurch gekennzeichnet, daß

— das Flammrohr (2) glatt und mit Öffnungen zur Zufuhr von Luft versehen ist, die einen beachtlichen Querschnitt aufweisen, um den ersten Bereich (1) mit der ersten Ausnehmung (4) zu verbinden,

— der Boden des Raumes (3) parallel beweglich bezüglich dem Flammrohr (2) längs der Achse (X-X') ist und mit einem festen Sitz (13) zusammenwirkt, der mit dem Flammrohr (2) verbunden ist und den ersten Bereich (1) von der Ausnehmung (4) in der Weise trennt, daß er mit dem Boden des Raumes (3) die Drosselmittel (31) mit einem veränderbaren Durchlaßquerschnitt bildet, und

— die Düse (14) wenigstens annähernd radial in dem Ring (10) in einer Weise angeordnet ist, daß sie in der Nähe des Randes des Auslasses (21) des Rings (10) mündet.

2. Brennkraftmaschine nach Anspruch 1, dadurch gekennzeichnet, daß der Hilfsverbrennungsraum (24) in einer Weise ausgebildet ist, daß der durch die Drosselmittel (31) durchtretende Luftstrom jegliche Bewegung um die Achse (X-X') vermeidet, die geeignet ist, den Kraftstoff, der sich mit dem Luftstrom vermischt, durch Zentrifugalkraft nach außen zu schleudern.

3. Brennkraftmaschine nach einem der Ansprüche 1 oder 2, dadurch gekennzeichnet, daß die Düsen (14) abstromseitig, bezogen auf das Auflager des Rings (10) auf dem festen Sitz (13) münden.

4. Brennkraftmaschine nach einem der Ansprüche 1 bis 3, dadurch gekennzeichnet, daß der Ausgleichskolben (11) mit dem Hydraulikkolben (17) zusammenwirkt, der in einer starren zylindrischen Ausnehmung (15) bewegbar ist, die mit Mitteln (16) zum Erzeugen von veränderbarem Druck (PC2) auf den Kraftstoff und mit den Düsen (14) durch eine veränderbare Düsennadel (18) verbunden ist, die durch das Zusammenwirken von zwei Elementen gebildet ist, nämlich einem Dorn (23) und einer Öffnung (26), von denen das eine mit dem Hydraulikkolben (17) und das andere mit der starren zylindrischen Ausnehmung (15) in der Weise verbunden ist, daß der Querschnitt des veränderbaren Durchlasses (18) sich im gleichen Sinne ändert, wie der Querschnitt des Durchlasses der Drosselmittel mit im Querschnitt veränderbaren Durchlass (31).

5. Brennkraftmaschine nach Anspruch 4, dadurch gekennzeichnet, daß der bewegliche Hydraulikkolben (17) wenigstens einen Freiraum (19) aufweist, der die starre zylindrische Ausnehmung (15), die unter dem veränderbaren Druck (PC2) des Kraftstoffs steht, mit einer Ausnehmung (20) verbindet, die unter einem Druck (PCR) steht, der geringer ist, als der kleinste Wert des veränderbaren Drucks (PC2), und die Verbindung zwischen den Ausnehmungen (15) und (20) dann hergestellt ist, wenn der bewegliche Kolben (17) an einer vorbestimmten Position in der Richtung der maximalen Öffnung des veränderbaren Durchlasses (18) vorbeigleitet.

6. Brennkraftmaschine nach einem der Ansprüche 1 bis 5, dadurch gekennzeichnet, daß

— der Ausgleichskolben (11) starr mit dem Hydraulikkolben (17) verbunden ist und

— das Ableitrohr (30) in zwei Arme (29) und (45) geteilt ist,

* von denen der erste (29) den Luftauslaß (37) des Verdichters (38) mit der ersten Ausnehmung (4) zur Versorgung des ersten Bereichs (1) des Hilfsverbrennungsraumes (24) verbindet,

* und von denen der zweite (45) den Luftauslaß (37) mit der zweiten Ausnehmung (7) der Versorgung des zweiten Verdünnungsbereichs (5) des Verbrennungsraumes (24) verbindet und mit zweiten Drosselmitteln (46) mit einem veränderbaren Durchlaßquerschnitt versehen ist, die aufstromseitig, bezogen auf die Verbindung mit dem Gasauslaß (42) der Brennräume (25) des Motors (35) angeordnet sind.

7. Brennkraftmaschine nach Anspruch 6, dadurch gekennzeichnet, daß die zweiten Drosselmittel (46) mit dem veränderbaren Durchlaßquerschnitt durch Steuermittel (47) betätigt werden, die auf Drücke reagieren, die stromaufseitig bzw. stromabseitig, bezogen auf die zweiten Drosselmittel (46) herrschen und die in einer Weise wirken, daß der Unterschied der Drücke, der durch die zweiten Drosselmittel (46) hervorgerufen wird, sich nur in Abhängigkeit des Luftdrucks (P), und vorzugsweise in der gleichen Richtung wie der verändert, der an einem Punkt irgendwo in dem Kreislauf herrscht, der mit der Luftauslaß (37) des Verdichters (38) am Gaseinlaß (40) der Turbine (41) verbunden ist.

8. Brennkraftmaschine nach Anspruch 7, dadurch gekennzeichnet, daß der Unterschied der Drücke (ΔP), der durch die zweiten Drosselmittel (46) hervorgerufen wird, proportional zu dem Unterschied zwischen dem Luftdruck (P) und einem Referenzdruck (P*) ist.

9. Brennkraftmaschine nach einem der Ansprüche 1 bis 5, dadurch gekennzeichnet, daß

— der Ausgleichskolben (11) nicht mit dem Hydraulikkolben (17) verbunden ist und in der starren zylindrischen Ausnehmung (12) frei bewegbar in der Richtung des Öffnens der Drosselmittel (31) ist, und aufgenommen durch einen Anschlag (32), der mit dem Hydraulikkolben (17) verbunden ist, mit dem Hydraulikkolben (17) zusammenwirkt, wenn die Drosselmittel (31) sich in der Richtung des Schließens bewegen, und

— die Fläche (33) des Ausgleichskolbens (11), die dem Ring (10) gegenüberliegt, zusammen mit der starren zylindrischen Ausnehmung (12) einen Hohlraum (34) begrenzt, in dem ein Referenzdruck (P*) herrscht, und der von der ersten Ausnehmung (4) getrennt ist, in der ein Druck (P) herrscht, der an irgendeinem beliebigen Punkt in dem Kreislauf herrscht, der mit dem Luftauslaß (37) des Verdichters (38) am Gaseinlaß (40) der Turbine (41) in einer Weise herrscht, daß der Unterschied der Drücke (ΔP), hervorgerufen durch die Drosselmittel mit dem veränderbaren Durchlaßquerschnitt (31) proportional zum Unterschied des Luftdrucks (P) und dem Referenzdruck (P*) ist, wenn der Ausgleichskolben (11) nicht an der Anlage (32) anliegt, die mit dem Hydraulikkolben (17) verbunden ist.

10. Brennkraftmaschine nach einem der Ansprüche 8 und 9, dadurch gekennzeichnet, daß der Referenzdruck (P*) veränderbar und eine Funktion des Druck (P) gemäß einer vorbestimmten Gesetzmäßigkeit ist.

11. Brennkraftmaschine nach Anspruch 10, dadurch gekennzeichnet, daß die vorbestimmte Gesetzmäßigkeit durch Verbinden der Ausnehmung (62), in der der Referenzdruck (P*) herrscht, mit der Ausnehmung, in der der Luftdruck herrscht durch eine erste starre Öffnung (G1), und durch Verbinden dieser Ausnehmung, in der der Referenzdruck (P*) herrscht, mit der Atmosphäre durch eine zweite starre Öffnung (G2) und durch eine dritte Öffnung (G3), die sich nur öffnet, wenn der Referenzdruck (P*) einen vorbestimmten Wert überschreitet, erhalten wird.

12. Brennkraftmaschine nach einem der Ansprüche 1 bis 11, dadurch gekennzeichnet, daß ein Pilotverbrennungsraum (48), der in dem Boden des Raumes (3) angeordnet ist, in den ersten Verbrennungsbereich (1) mündet und gebildet ist
— durch einen Kraftstoffzerstäuber (49), der längs der Achse (X-X') des Rings (10) angeordnet ist, der stets mit den Mitteln zum Erzeugen des Drucks auf den Kraftstoff (16) verbunden ist, und der in einer dritten Ausnehmung (50) mündet, die koaxial zu der Achse (X-X') angeordnet ist und die Nase des Zerstäubers (49) umgibt,
— wobei die dritte Ausnehmung (50) durch die starren Ausnehmungen (51), die vorzugsweise tangential oder teilweise tangential angeordnet sind, mit der ersten Ausnehmung (4) verbunden sind,
die starren Ausnehmungen (51) in einer Weise bemessen sind, daß sie einen Durchlaß von Luft erlauben, der die vollständige Verbrennung des Kraftstoffs, der fortlaufend durch den Zerstäuber (49) eingebracht wird, in allen Betriebsbereichen des Verbrennungsraumes (24) sicherstellt.

13. Brennkraftmaschine nach Anspruch 12, dadurch gekennzeichnet, daß der Pilotverbrennungsraum (48) Zündmittel (52) trägt, die in dem Ring (10) in der Nähe des Eintritts des Kraftstoffs sitzen, der durch den Zerstäuber (49) eingebracht wird.

14. Brennkraftmaschine nach einem der Ansprüche 12 und 13, dadurch gekennzeichnet, daß der Boden des Raumes, der die dritte Ausnehmung (50) begrenzt, durch eine doppelte Wand (53) gebildet ist, die aus feuerfestem Material besteht und stets auf einer über 600°C erhöhten Temperatur gehalten ist, sobald der Pilotverbrennungsraum (48) in Betrieb ist, in einer Weise, daß sie einen heißen Punkt bildet, der geeignet ist, automatisch die Verbrennung des Kraftstoffs wieder zu entfachen, der durch den Zerstäuber (49) eingebracht wird, falls ein ungewolltes und kurzzeitiges Erlöschen der Flamme in dem Pilotverbrennungsbereich (48) auftritt.

15. Brennkraftmaschine nach einem der Ansprüche 1 bis 14, dadurch gekennzeichnet, daß die Düsen (14) mit Reinigungsöffnungen (63) verbunden sind, die mit der ersten Ausnehmung (4) verbunden sind.

16. Brennkraftmaschine nach einem der Ansprüche 1 bis 15, dadurch gekennzeichnet, daß die Düsen (14) in eine Nut (67) münden, die vorzugsweise durch eine ringförmige Nase (66) begrenzt ist.

## Claims

1. Internal combustion engine (35) supercharged by a turbocompressor (36), the air outlet (37) of the compressor (38) communicating with the air inlet (39) of the working chambers (25) of the engine (35) and with a bypass pipe (30) provided with throttling means (31) having a variable passage section, and the gas inlet (40) of the turbine (41) communicating with the gas outlet (42) of said working chambers (25) and with the bypass pipe (30) on the downstream side of said throttling means (31), an auxiliary combustion chamber (24) being mounted on this bypass pipe (30), which auxiliary combustion chamber (24) comprises:
a primary combustion zone (1) having a shape of revolution about an axis (X-X'), which zone is defined by a flame tube (2) of cylindrical and/or frustoconical shape and a chamber inner end (3) and communicates with a first cavity (4) connected to the bypass pipe (30),
a secondary dilution zone (5) located on the downstream side of said primary zone (1) and communicating with a second cavity (7) connected to the gas outlet (42) of the working chambers (25), the gas outlet (8) of which communicates with the gas inlet (40) of the turbine (41),
an inlet (9) for fuel under pressure constituted by at least one nozzle (14) which is provided in the chamber inner end (3) and opens onto the primary combustion zone (1) and
ignition means (52) for the fuel coming from said fuel inlet (9),

the chamber inner end (3) being constituted by a sleeve (10) rigidly connected to a balancing piston (11), said sleeve (10) and piston (11) being coaxial with said axis (X-X'), the balancing piston (11) being slidable in a cylindrical bearing surface (12) rigidly connected to the walls of the first cavity (4), characterized in that :

the flame tube (2) is smooth and devoid of air supply orifices of notable section which may put the primary zone (1) in communication with said first cavity (4),

the chamber inner end (3) is movable relative to the flame tube (2) in a direction parallel to said axis (X-X') and cooperates with a fixed seat (13) rigidly connected to the flame tube (2) and separating the primary zone (1) from the first cavity (4) so as to constitute, with the chamber inner end (3), the throttling means (31) with a variable passage section, and

said nozzle (14) is arranged at least approximately radially in said sleeve (10) in such manner as to open out in the vicinity of the trailing edge (21) of said sleeve (10).

2. Internal combustion engine according to claim 1, characterized in that the auxiliary combustion chamber (24) is arranged in such manner as to ensure that the air flow passing through the throttling means (31) has no rotating motion about said axis (X-X') liable to project the fuel mixed with said air flow outwardly under centrifugal effect.

3. Internal combustion engine according to one of the claims 1 and 2, characterized in that the nozzles (14) open out on the downstream side of the bearing surface of the sleeve (10) on the fixed seat (13).

4. Internal combustion engine according to any one of the claims 1 to 3, characterized in that the balancing piston (11) is cooperable with a hydraulic piston (17) slidable in a fixed cylindrical cavity (15) which communicates with variable fuel pressure (PC2) producing means (16) and with the nozzles (14) through a variable jet (18) realized by the cooperation of two elements, namely a needle (23) and an orifice (26), one of which elements is rigidly connected to the hydraulic piston (17) while the other element is rigidly connected to the fixed cylindrical cavity (15) so that the passage section of the variable jet (18) varies in the same direction as the passage section of the throttling means (31) having a variable passage section.

5. Internal combustion engine according to claim 4, characterized in that the movable hydraulic piston (17) comprises at least one recess (19) which puts the fixed cylindrical cavity (15) at the variable fuel pressure (PC2) in communication with a discharge cavity (20) maintained at a pressure (PCR) lower than the minimum value of said variable pressure (PC2), the communication between the cavities (15) and (20) being established when the movable piston (17) travels beyond a predetermined position in the direction for the maximum opening of the variable jet (18).

6. Internal combustion engine according to any one of the claims 1 to 5, characterized in that :

the balancing piston (11) is rigidly connected to the hydraulic piston (17) and

the bypass pipe (30) is divided into two branches (29) and (45), wherein :

the first branch (29) puts the air outlet (37) of the compressor (38) in communication with the first supply cavity (4) of the primary zone (1) of the combustion chamber (24), and

the second branch (45) puts said air outlet (37) in communication with the second supply cavity (7) of the secondary dilution zone (5) of the combustion chamber (24) and is provided with second throttling means (46) having a variable passage section located on the upstream side of the communication with the second cavity (7) and on the upstream side of the communication with the gas outlet (42) of the working chambers (25) of the engine (35).

7. Internal combustion engine according to claim 6, characterized in that said second throttling means (46) having a variable passage section are actuated by control means (47) responsive to the pressures prevailing respectively on the upstream side and downstream side of said second throttling means (46) and arranged in such manner that the pressure difference produced by said second throttling means (46) varies solely as a function of the air pressure (P), and preferably in the same direction as the latter, prevailing at any point of the circuit connecting the air outlet (37) of the compressor (38) to the gas inlet (40) of the turbine (41).

8. Internal combustion engine according to claim 7, characterized in that the pressure difference ($\Delta$P) produced by the second throttling means (46) is proportional to the difference between said air pressure (P) and a reference pressure (P*).

9. Internal combustion engine according to any one of the claims 1 to 5, characterized in that :

the balancing piston (11) is not connected to the hydraulic piston (17) and is freely slidable in the fixed cylindrical bearing surface (12) in the direction for opening the throttling means (31) and cooperates, by bearing against an abutment (32) rigidly connected to the hydraulic piston (17), with said hydraulic piston (17) when the throttling means (31) move in the closing direction,

the face (33) of the balancing piston (11) remote from the sleeve (10) defines, with the fixed cylindrical bearing surface (12), a cavity (34) in which a reference pressure (P*) prevails and which is separated from said first cavity (4) in which prevails the air pressure (P) prevailing at any point of the circuit connecting the air outlet (37) of the compressor (38) to the gas inlet (40) of the turbine (41),

in such manner that the pressure difference ($\Delta$P) produced by said throttling means (31) having a variable passage section is proportional to the difference between the air pressure (P) and the reference pressure (P*) when the balancing piston (11) does not bear against the abutment (32) rigidly connected to the hydraulic piston (17).

10. Internal combustion engine according to one of the claims 8 and 9, characterized in that the reference pressure (P*) is variable and is a function of said air pressure (P) according to a predetermined law.

11. Internal combustion engine according to claim 10, characterized in that said predetermined law is realized by putting the cavity (62) at the reference pressure (P*) in communication with the cavity at the air pressure (P) through a first fixed orifice (G1) and the same cavity at the reference pressure (P*) in communication with the atmosphere through a second fixed orifice (G2) and a third variable orifice (G3) which only opens when the reference pressure (P*) reaches a predetermined threshold.

12. Internal combustion engine according to any one of the claims 1 to 11, characterized in that a pilot combustion zone (48), arranged in the chamber inner end (3), opens onto said primary zone (1) and is constituted

by a fuel sprayer (49) arranged on said axis (X-X') of the sleeve (10) which permanently communicates with the fuel pressure producing means (16) and which opens onto a third cavity (50) coaxial with said axis (X-X') and surrounding the nose of said sprayer (49),

which third cavity (50) communicates through fixed orifices (51) preferably arranged tangentially or partly tangentially, with the first cavity (4), said fixed orifices (51) being so dimensioned as to permit the passage of the air ensuring the complete combustion of the fuel permanently introduced by the sprayer (49) under all the conditions of operation of the combustion chamber (24).

13. Internal combustion engine according to claim 12, characterized in that said pilot combustion zone (48) comprises ignition means (52) disposed in the sleeve (10) in the vicinity of the inlet of the fuel introduced by the sprayer (49).

14. Internal combustion engine according to one of the claims 12 and 13, characterized in that the chamber inner end defining the third cavity (50) is constituted by a double wall (53) composed of refractory material and so arranged as to be permanently brought to a high temperature higher than 600°C as soon as the pilot combustion zone (48) is in operation, so as to constitute a hot point capable of automatically reinitiating the combustion of the fuel introduced by the sprayer (49) in the event of an accidental and momentary extinction of the flame in the pilot combustion zone (48).

15. Internal combustion engine according to any one of the claims 1 to 14, characterized in that the nozzles (14) are connected to purge orifices (63) communicating with the first cavity (4).

16. Internal combustion engine according to any one of the claims 1 to 15, characterized is that the nozzles (14) open onto a groove (67) which is preferably limited by an annular nose portion (66).

*Fig. 1*

*Fig. 2*

Fig.3

## Fig. 4

Fig.5

Fig. 6

Fig. 8

Fig. 7

EP 0 301 950 B1

Fig.9

Fig.10

Fig. 11

EP 0 301 950 B1